# EUROPÄISCHE PATENTANMELDUNG

(11) **EP 1 260 403 A1**
(43) Veröffentlichungstag der Anmeldung: **27.11.2002**
(21) Anmeldenummer: 02010564.9
(22) Anmeldetag: 10.05.2002
(51) Int. Cl.: B60K 37/00, B62D 25/14, B23P 19/00

(54) **Montageeinheit zum Einsetzen in eine Montageöffnung**

(30) Priorität: 15.05.2001 DE 10123538
(71) Anmelder: Methode Electronics Malta Ltd., Mriehel QRM 09 (MT)
(72) Erfinder: Galea, Alexander, Dingli RBT 11 (MT)
(74) Vertreter: Haft, Uwe Michael

(57) **Zusammenfassung**

Eine z.B. als Schalterblock ausgebildete Montageeinheit (1) weist ein nach untern offenes Gehäuse (2) und ein dieses verschließendes Basisteil auf, das als Betätigungsglied (4) für Riegelelemente (9) dient. Das in das Gehäuse (2) beim Einsetzen in eine Montageöffnung (16) teleskopartig eindrückbare Betätigungsglied (4) betätigt einen Kulissenantrieb zum wiederholbaren Verstellen der Riegelelemente (9).

Durch starken Druck auf die Montageeinheit (1) können die Riegelelemente (9) in einfacher Weise wieder gelöst werden.

## Beschreibung

Die Erfindung bezieht sich auf eine Montageeinheit zum Einsetzen in eine Montageöffnung insbesondere eines Instrumentenboards eines Fahrzeugs, wobei die Montageeinheit zumindest ein quer zur Einsetzrichtung bewegbares, an einem Gehäuse der Montageeinheit abgestütztes Riegelelement zum Hintergreifen eines Wandteils der Montageöffnung aufweist.

Es ist üblich, eine z.B. als Schalterblock ausgebildete Montageeinheit mit quer zur Einsetzrichtung federnden Spreizhaken zu versehen, die sich nach dem Einsetzen in die Montageöffnung hinter Anschlagflächen des Instrumentenboards formschlüssig verhaken, wobei zum sicheren Ausfedern der Spreizhaken ein geringes Höhenspiel eingehalten werden muß. Zur Demontage des Schalterblocks müssen die Spreizhaken mittels eines durch Hilfsöffnungen einzuführenden Werkzeugs in eine Entriegelstellung zurückt gedrückt werden.

Ferner ist es üblich, den Schalterblock mit federnden schrägflächigen Rasthaken zu versehen, die sich mit entsprechenden Gegenschrägen des Instrumentenboards kraftschlüssig verspannen. Dabei kann nachlassende Federkraft zur Destabilisierung der Verbindung führen. Zum Lösen des bündig eingesetzten Schalterblocks bedarf es z.B. eines schraubenzieherartigen Werkzeugs, das am Randspalt angesetzt wird, wobei es zu sichtbaren Verletzungen der Oberfläche kommen kann.

Der Erfindung liegt die Aufgabe zugrunde vor allem die Demontage des Bauteils zu erleichtern.

Diese Aufgabe wird durch Erfindung gemäß Anspruch 1 gelöst. In einfacher Weise sind die Kulissenelemente und der Schieber mit dem Betätigungsteil bzw. dem Schieber einstückig verbunden. Die Montageeinheit kann z.B. mit eingezogenem Riegelteil leichtgängig in die Montageöffnung eingeführt werden, ohne daß es dabei zu undefinierten Kratzeffekten an den Riegelteilen und den Öffnungskanten kommen kann. Nach dem Aufsetzen auf den Tiefenanschlag braucht die Montageeinheit durch einfachen Druck auf die Gehäuseaußenseite teleskopartig soweit zusammengedrückt werden, daß wechselseitig wirkenden Kulissenelemente des Schiebers und des Betätigungsteils mit ihren schrägen Funktionsflächen in Eingriff gelangen und das Riegelteil zumindest teilweise aus der Montagestellung heraus in die Riegelposition verschieben. Die Riegeloberseite befindet sich dabei unterhalb der Anschlagschulter des Instrumentenboards. Beim Loslassen des Gehäuses wird der Schieber in seine Endstellung verschoben. Das ausgefahrene Riegelelement legt sich dann unter der Spannung der Feder spielfrei an die Anschlagschulter der Montageöffnung an, so daß die Gehäuseoberseite bzw. ein an dieser angebrachte Blende eine definierte Höhenlage im Instrumentenboard einnehmen kann.

Zum Ausbau der Montageeinheit kann das Gehäuse in einfacher Weise von Hand ohne Zuhilfenahme eines Werkzeugs erneut in die Montageöffnung hineingedrückt werden. Die Kulissenelemente gelangen erneut in Eingriff, der Schieber wird weiter gedreht wird, und die Verriegelung durch das Zurückschwenken des Riegelelementes in das Gehäuse gelöst. Die Federkraft drückt nun das Gehäuse über das Einbauniveau aus der Montageöffnung heraus, so daß es leicht von Hand erfasst und die Montageeinheit entnommen werden kann.

Vorteilhafte Weiterbildungen der Erfindung ergeben sich aus den in den Ansprüchen 2 bis 9 gekennzeichneten Merkmalen.

Durch die Weiterbildung nach Anspruch 2 kann der Schieber in der Art einer Kugelschreibermechanik in einfacher Weise mit jedem Hub weitergedreht werden.

Durch die Weiterbildungen nach den Ansprüchen 3 und 4 ist es möglich, die diametrale Breite der Riegelelemente über die Breite des Bauteils zu vergrößern und so die Riegelelemente auf entgegengesetzten Gehäuseseiten austreten zu lassen, so daß die Montageeinheit mit nur einem Schieber beidseitig in der Montageöffnung fixiert werden kann.

Der Schieber lässt sich in die zylindrische Aufnahme nach Anspruch 5 leicht einsetzen und wird darin sicher geführt.

Die Basisplatte nach Anspruch 6 dient als Gehäuseteil, das die Gehäuseunterseite verschließt, so daß für Betätigungsfunktion keine zusätzlichen Bauteile benötigt werden.

Durch die Weiterbildungen nach den Ansprüchen 7 und 8 wird die Montageeinheit sicher an 4 voneinander entfernten Stellen in der Montageöffnung sicher fixiert, wobei die beiden Druckfedern eine Vorspannung aufweisen, die erheblich höher ist als die Betätigungskraft der Bedienelemente. Die Kulissengeometrie ist so abgestimmt, daß sie nur bei beidseitig kräftigem Eindrücken richtig funktioniert, so daß durch zufällige Einwirkung eine ungewolltes Lösen nicht möglich ist.

Durch die Weiterbildung nach Anspruch 9 wird in einfacher Weise das Basisteil im Gehäuse gehalten und der erforderliche Betätigungshub ermöglicht.

Durch die Dimensionierung des Tiefenabstands zwischen den Anlageflächen der Montageeinheit wird sichergestellt, daß sich dieses in der Montageöffnung spielfrei verspannt und daß dadurch die Höhenlage der Oberseite der Baueinheit genau definiert ist.

Ein Ausführungsbeispiel der Erfindung ist in der Zeichnung dargestellt und wird im folgenden näher erläutert. Es zeigen:
- Figur 1: eine perspektivische Explosionsdarstellung einer Montageeinheit,
- Figur 2: perspektivisch die Montageeinheit nach Figur 1 im zusammengesetzten Zustand,
- Figur 3: einen Querschnitt durch die Montageeinheit nach Figur 1b beim Einsetzen in eine Montageöffnung unmittelbar vor dem Verriegeln,
- Figur 4: die Baueinheit nach Figur 3 während des Verriegelns,
- Figur 5: die Baueinheit nach Figur 4 nach dem Verriegeln.

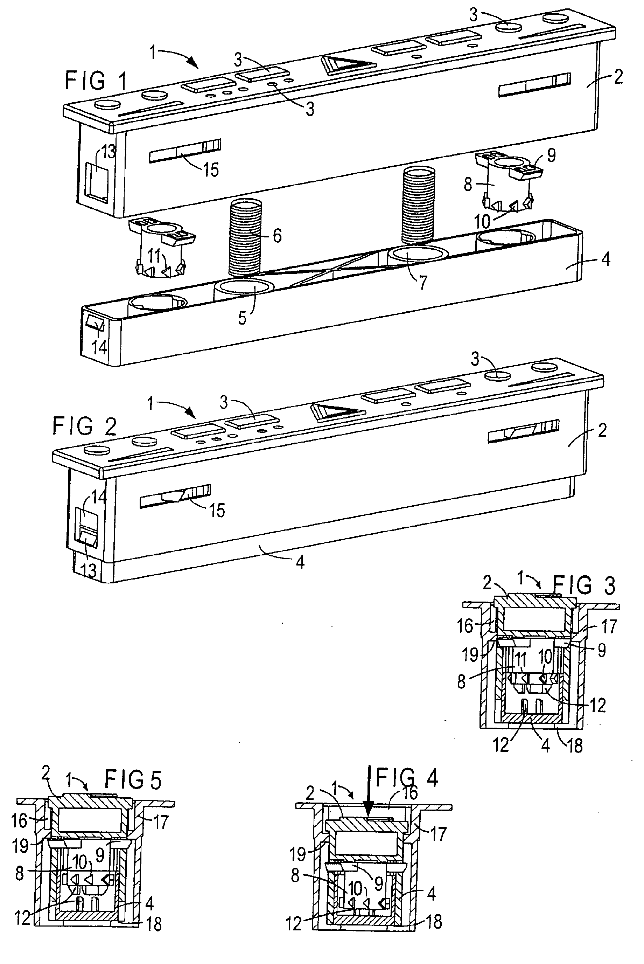

Nach den Figuren 1 und 2 ist eine Montageeinheit 1 als leistenförmig länglicher Schalterblock ausgebildet. Ein Gehäuse 2 ist auf seiner Oberseite mit Bedien- und Anzeigeelementen 3 versehen. Das Gehäuse 2 ist auf seiner Unterseite mit Basisteil verschlossen, das als Betätigungsglied 4 dient und im Gehäuse 2 anhebbar gelagert ist. Das Betätigungsglied 4 ist mit zwei hohlzylindrischen Öffnungen 5 für als Spiraldruckfedern dienende Federn 6 versehen, die zwischen dem Gehäuse 2 und Basisteil 4 verspannt sind. Zu beiden Seiten der Öffnungen 5 sind im wesentlichen zylindrische Aufnahmenöffnung 7 zur Aufnahme und Führung von als Drehschieber ausgebildeten Schiebern 8 vorgesehen

Diese sind im wesentlichen zylindrisch ausgebildet und weisen an ihrer Oberseite radial abstehende einander diametral gegenüberliegende Riegelelemente 9 sowie auf ihrer Unterseite umlaufend verteilte radial abstehende Kulissenelemente 10 mit schräg verlaufenden Funktionsflächen 11 auf, die wechselweise mit entsprechenden hier verdeckten, in die Aufnahmeöffnung 7 hineinragenden Kulissenelementen 12 des Betätigungsglieds 4 zusammenwirken und mit diesen einen Kulissenantrieb bilden. Das Gehäuse 2 ist ferner mit stirnseitigen Rastfenstern 13 versehen in die entsprechende Rasthaken 14 des Betätigungsteils 4 von innen hineinragen. Das Rastfensters 13 ist so hoch, daß der Rasthaken 14 um einen Betätigungshub verschiebbar ist. Das Betätigungsglied 4 ragt um eben diese Hubhöhe nach unten aus dem Gehäuse 3 heraus und kann gegen die Kraft der Federn 6 in dieses hineingedrückt werden.

An seien Längsseiten weist das Gehäuse 2 schlitzartige Durchbrüche 15 für die Riegelelemente 9 auf. Im rechten Durchbruch 15 der Figur 2 ist das Riegelelement 9 in seiner Ausgangsstellung bzw. Lieferstellung gezeigt, in der der Schieber so eingestellt ist, das es von innen in die Gehäusewand hinein, nicht aber aus Gehäusewand nach außen herausragt. Zur Veranschaulichung der verschiedenen Stellungen ist das Riegelelement 9 im linken Durchbruch 15 in seiner Riegelstellung dargestellt, in der es aus der Gehäusewand herausragt. Die beiden Kulissenantriebe sind allerdings so ausgebildet und eingestellt, daß sich solche unterschiedlichen Positionen nicht gleichzeitig einstellen können. Die jeweiligen Positionen werden durch schrittweises Verdrehen der Schieber verändert, wenn das Betätigungsglied 4 in das Gehäuse 2 hineingedrückt wird und dabei den Kulissenantrieb betätigt.

Nach Figur 3 ist die Montageeinheit bereits in eine Montageöffnung 16 eines Instrumentenboards 17 eines Automobils lose eingesteckt, aber noch nicht fixiert.
Die Unterseite des Betätigungsglieds 4 sitzt auf einem Tiefenanschlag 18 der Montageöffnung 16 auf. Die zurückgezogenen Rastelemente 9 befinden sich noch teilweise oberhalb einer in die Montageöffnung 16 hineinragenden Anschlagschulter 19 des Instrumentenboards 17. Die Kulissenelemente 10 des Schiebers 8 befinden sich im Eingriff mit oberen Kulissenelementen des Betätigungsglieds 4 und oberhalb der unteren Kulissenelementen 12 des Betätigungsglieds 4.

Nach Figur 4 ist das Gehäuse 2 durch Druck auf seine Oberseite in der Pfeilrichtung soweit nach unten gedrückt, daß es mit seiner Unterseite ebenfalls auf dem Tiefenanschlag 18 aufsitzt. Dadurch sind die Kulissenelemente 10 des Schiebers 8 mit den unteren Kulissenelementen 12 des Betätigungsglieds 4 in Eingriff gelangt, wobei die wechselseitig angeordneten schrägen Funktionsflächen den Schieber 8 mit den Riegelelementen 9 und den Kulissenelementen 10 um einen Winkelschritt weiterdrehen, so daß die äußeren Ecken der Riegelelemente 9 bereits aus dem Gehäuse 2 herausragen. Danach kann das Gehäuse 2 losgelassen und durch die Kraft der Federn 6 nach oben gedrückt werden.

Nach Figur 5 ist befindet sich die Montageeinheit 1 in ihrer Endstellung, in der sich die Kulissenelemente 10 des Schiebers mit den oberen Kulissenelementen 12 des Betätigungselementes 4 in Eingriff befinden. Im Zuge dieser Bewegung wurde der Schieber 8 um einen weiteren Winkelschritt in seine volle Riegelstellung verdreht und darin gesichert. Die aus dem Gehäuse herausragenden Ecken der Riegelelemente 9 stoßen mit ihrer Oberseite unter dem Federdruck gegen die Anschlagschultern des Instrumentenboards. Die Montageeinheit 2 ist nun in der Aufnahmenöffnung 16 in einer präzisen Höhenlage fixiert.

Um die Montageeinheit 1 wieder ausbauen zu können, muß das Gehäuse 2 lediglich an beiden Enden nach unten gedrückt werden, um den Schieber 8 in der gleichen Weise wie beim Einsetzen weiter zu drehen. Die Ecken der Riegelelemente 9 gelangen dabei aus dem Anschlagbereich. Beim Loslassen wird nun das Gehäuse 2 durch die Federn 6 in die in Figur 3 gezeigte Ausgangsstellung angehoben, in der die Montageeinheit entnommen werden kann.

### Bezugszeichen

- 1: Montageeinheit
- 2: Gehäuse
- 3: Bedien- und Anzeigeelemente
- 4: Betätigungsglied
- 5: Öffnung
- 6: Feder
- 7: Aufnahmeöffnung
- 8: Schieber
- 9: Riegelelement
- 10: Kulissenelement
- 11: Funktionsflächen
- 12: Kulissenelement
- 13: Rastfenster
- 14: Rasthaken
- 15: Durchbruch
- 16: Montageöffnung
- 17: Instrumentenboard
- 18: Tiefenanschlag
- 19: Anschlagschulter

## Patentansprüche

1. Montageeinheit (1) zum Einsetzen in eine Montageöffnung (16) insbesondere eines Instrumentenboards (17) eines Fahrzeugs,
wobei die Montageeinheit (1) zumindest ein quer zur Einsetzrichtung bewegbares, an einem Gehäuse (2) der Montageeinheit (1) abgestütztes Riegelelement (9) zum Hintergreifen einer Anschlagschulter (19) eines Wandteils der Montageöffnung (16) aufweist,
**dadurch gekennzeichnet, daß** die Montageeinheit (1) zumindest ein Betätigungsglied (4) aufweist, das auf einen Tiefenanschlag der Montageöffnung (16) aufsetzbar ist,
daß das Betätigungsglied (4) gegen eine Feder (6) in das Gehäuse (2) eindrückbar ist,
daß das im Gehäuse (2) quer zur Einsetzrichtung verschiebbar gelagerte Riegelelement (9) mit einem Schieber (8) kinematisch verbunden und hinter eine Anschlagschulter (19) des Montageöffnung (16) verschiebbar ist und daß das Betätigungsglied (4) und der Schieber (8) mit wechselseitig angeordneten und zusammenwirkenden, einen Kulissenantrieb bildenden Kulissenelementen (10, 12) zum wiederholbaren Betätigen des Riegelelementes (9) verbunden sind.

2. Montageeinheit nach Anspruch 1,
**dadurch gekennzeichnet, daß** das Gehäuse (2) drucktastenartig gegen das an den Tiefenanschlag (18) aufsetzbare Betätigungsglied (4) drückbar ist.

3. Montageeinheit nach Anspruch 1, oder 2
**dadurch gekennzeichnet, daß** der Schieber (8) im Gehäuse (2) rotierbar gelagert und mit einer Mehrzahl der umlaufend verteilten Kulissenelemente (10) versehen ist.

4. Montageeinheit nach Anspruch 3,
**dadurch gekennzeichnet, daß** der in der Gehäusemitte angeordnete Schieber (8) zwei der diametral gegenüberliegenden flügelartig vorstehenden Riegelelemente (9) aufweist,
daß die Riegelelemente (9) in einer Montagestellung innerhalb der Außenseite des Gehäuses (2) liegen und in einer Riegelstellung aus der Außenseite durch einen Durchbruch (15) des Gehäuses (2) herausragen.

5. Montageeinheit nach Anspruch 3 oder 4,
**dadurch gekennzeichnet, daß** der im wesentlichen zylindrische Schieber (8) in einer zylindrischen Aufnahmeöffnung (7) des Betätigungsglieds (4) geführt ist.

6. Montageeinheit nach einem der vorhergehenden Ansprüche,
**dadurch gekennzeichnet, daß** das Betätigungsglied (4) als das Gehäuse (2) verschließende Basisplatte ausgebildet ist und zum Tiefenanschlag (18) hin aus dem Gehäuse (2) zumindest um einen Betätigungshub hinausragt.

7. Montageeinheit nach nach einem der vorhergehenden Ansprüche,
**dadurch gekennzeichnet, daß** die leistenförmige Montageeinheit (1) zwei der Kulissenantriebe aufweist, die mit Abstand zu den Stirnseiten angeordnet sind.

8. Montageeinheit nach einem der vorhergehenden Ansprüche,
**dadurch gekennzeichnet, daß** die Feder (6) als Spiraldruckfeder ausgebildet ist und daß zwei der Federn (6) zwischen dem Betätigungsglied (4) und dem Gehäuse (2) eingespannt sind.

9. Montageeinheit nach einem der vorhergehenden Ansprüche,
**dadurch gekennzeichnet, daß** das Gehäuse (2) stirnseitige Rastfenster (13) aufweist, in die Rasthaken (14) des Betätigungselementes eingreifen und daß die sich in der Betätigungsrichtung erstreckende Fensterhöhe größer ist als der Betätigungshub.

10. Montageeinheit nach einem der vorhergehenden Ansprüche,
**dadurch gekennzeichnet, daß** der Abstand zwischen den Einspannflächen der Montageeinheit (1) im Lieferzustand größer ist als der Abstand zwischen dem Tiefenanschlag und der Anschlagschulter (19) der Montageöffnung (16).
